# EUROPEAN PATENT APPLICATION

(11) **EP 4 354 370 A1**
(43) Date of publication of application: **17.04.2024**
(21) Application number: 22200577.9
(22) Date of filing: 10.10.2022
(51) Int. Cl.: G06Q 10/0639, G06Q 50/08, E01C 19/48

(54) **METHOD AND SYSTEM FOR PROVIDING FINAL VERIFICATION DATA OF THE PAVEMENT QUALITY OF A PAVING PROCESS**

(71) Applicant: Volvo Construction Equipment AB, 631 85 Eskilstuna (SE)
(72) Inventor: LUBY, Martyn, 644 36 Torshälla (SE); ÅSTRÖM, Jesper, 722 23 Västerås (SE); SJÖBERG, Peter, 725 91 Västerås (SE); SPJUTARE, Christian, 363 30 Rottne (SE)
(74) Representative: Zacco Sweden AB

(57) **Abstract**

Method for providing verification data for a paving process, where the paving process is performed by a paving train comprising at least a paving system and a compaction system, where the method comprises the steps of; giving information regarding the basecourse and the anticipated end result to the control system; continuously measuring end result data of the paving process; determining the end quality of the paving process by the control system using the end result data; comparing the determined end quality to the anticipated end result, adjusting at least one parameter of the paving process or paved material properties based on the determined end quality, if the determined end quality is outside of an anticipated end result range; and comparing the anticipated end result with the end result data in order to obtain final verification data for the paving process.

## Description

### TECHNICAL FIELD

The present invention relates to a method for providing final verification and validation data of the finished pavement quality made by a paving train. The paving train comprises at least a paving system and a compaction system. The end result of the paving process is constantly measured by a sensor system arranged at the end of the paving train, and the data is stored in a memory such that the pavement quality can be assessed and verified in an easy manner.

### BACKGROUND ART

In road construction, the road surface is paved using a paving train comprising at least a paving machine and a compactor, where the paving machine spreads and compacts the road material, e.g. asphalt, in an even layer and where the compactor further compresses the asphalt to form the final road surface. The evaluation of the end result is normally carried out after the road surface is completed and the asphalt has cooled down. In one example, a measurement is carried out with a separate unit, e.g. a surface scanner after the job has been completed in order to evaluate e.g. cross-fall, smoothness, texture of the surface, density and compaction degree.

The quality of the result is largely based on experience and know-how of the operators of the paving machine and the compactor. A skilled operator may e.g. take account of environmental conditions such as temperature and humidity, and the temperature and quality of the material used. After the completed job, the surface may be evaluated, either by measuring or by visual inspection. Should some problems be detected, part of the surface may have to be repaved or repaired. A skilled operator can often detect problems and compensate for these during the paving process in order to avoid an end result that requires rework.

Compaction evaluation is done through destructive testing where core-samples are drilled in a random/pre-defined pattern. This is time consuming, bad for overall quality and shows the quality only in those specific spots with no way of knowing the result on the rest of the surface. A further aspect is that the final pavement quality may have to be verified with regards to contract obligations and/or authority demands. The test results may be collected and may be used for final documentation for the validation of the end result.

US 10480131 B1 discloses a method for controlling a paving process, where the paving process is performed by several participating units terminated by a compactor. The end result of the paving process is measured by a sensor system arranged on the compactor that measures e.g. material smoothness, stiffness and temperature. Based on the measured end result, the speed of paving machine units may be adjusted.

Such a paving method may function in some cases, but there is still room for an improved method for providing final verification data of the paving process.

### DISCLOSURE OF INVENTION

An object of the invention is therefore to provide an improved method for providing verification data for the paving process. A further object of the invention is to provide a control system for providing verification data for the paving process. A further object of the invention is to provide a paving train comprising such a control system. An object is also to provide a computer program and a computer program product adapted to perform the steps of the method.

The solution to the problem according to the invention is defined by the claims directed to a method, a control system and a paving train. The claims also contain advantageous further developments of the inventive method.

Claims for a computer program and a computer program product are also enclosed.

In the inventive method for providing verification data for a paving process, where the paving process is performed by a paving train comprising at least a paving system and a compaction system, where the paving process is controlled by a control system comprising a control unit, the steps of; giving information regarding the basecourse to the control system; giving information regarding the anticipated end result to the control system; continuously measuring end result data of the paving process by a sensor system arranged at the end of the paving train; determining the end quality of the paving process by the control system using the end result data; comparing the determined end quality to the anticipated end result, adjusting at least one parameter of the paving process or paved material properties based on the determined end quality, if the determined end quality is outside of an anticipated end result range; continuously saving the end result data in a memory; and comparing the anticipated end result with the end result data in order to obtain final verification data for the paving process are comprised.

With the inventive method, the end result data of the paving process is stored in a memory and can be used as verification data when the finished pavement quality is validated. By saving the end result data in a memory, the saved data can be used for the final verification of the paved surface and for the final documentation that may be necessary for authorities, without having to perform specific verification measurements at a later stage. At the same time, the end result data is used to evaluate the end quality directly, and a parameter of the paving process can be adjusted based on the determined end quality, if the end quality is outside of the anticipated end result. In this way, the paving process can be evaluated and adjusted in real-time, such that the anticipated end result can be met. By saving the end result data, evidence of the paving process can be provided and the required end result parameters can be provided, e.g. for final documentation purposes. The final documentation can also be used for setting up maintenance plans for e.g. a road, where the actual measurements, i.e. the end result data, of the paving process is used to determine the need for later maintenance.

The end result may e.g. indicate that one part of a road may need one type of maintenance due to the saved end result data, where the end result data may be close to the anticipated end result, and another part of the road may need another type of maintenance since the end result data differs more from the anticipated end result. The end result data may also be weighted to other parameters, e.g. the density of traffic on a road, in order to determine the actual maintenance need. It is also possible to use the end result data to follow up the wear of a road, which may be linked to the used material or the used paving process for that road.

The inventive method may be used with an autonomous paving train, where at least the paving system and the compaction system are driven autonomously. Both the paving system and the compaction system use inputs from several sensors that detect and measure important parameters for the paving train. Some sensors are provided on the paving system and the compaction system, and are used for feedback by both systems, and other external sensors are preferably also used to give feedback to the paving train.

The saved end result data can be used in different ways, depending on the end result verification process. In one case, the end result data is sent to a database, e.g. placed at an authority or a subcontractor responsible for the paved road, where the end result is stored. In this way, the end result data can be compared to the anticipated and result and can be used for follow up, e.g. when a damage to a road is detected. The end result data for that part of the road can then be assessed to see if the end result data deviated from the anticipated end result, or how close the end result data was to the anticipated end result. It is also possible to compare the actual end result data to the anticipated end result, and to compile a data set in which the difference between the actual end result values and the anticipated end result values is shown. Such a weighed dataset may be useful for final documentation of the paved road, and for maintenance purposes.

Before the paving process starts, information regarding the basecourse, i.e. the surface on which the paving is to be made, is given to the paving control system. The basecourse may e.g. be an old paved road where the surface is milled, or a newly laid ground comprising gravel, or something else. Knowledge of the basecourse is important in order to be able to achieve a an anticipated and proper end result, especially for an autonomous paving train where a skilled operator is missing. The variation of the basecourse over distance is also important.

Information regarding the anticipated end result is also given to the control system before the paving process starts. The anticipated end result is the end result that a customer expects and has ordered, i.e. the desired end result. The anticipated end result may be defined as an interval where the values should be within a specified range, or a value may be given as a maximum or minimum value for that specific parameter. The density of the paved surface may e.g. be given as an interval in which the end result value should be, or may be given as a minimum allowable density with no upper limit.

During the paving process, the system may determine that the determined end quality is outside of the anticipated end result and that an adjustment of one or more parameters cannot achieve the anticipated end result. The system may in this case trigger an alarm and/or may store these values as a deviation if the deviation is within a predefined range. In this way, a paving process that will give a satisfactory end result does not have to be stopped, even if the end result is slightly outside of the anticipated end result.

The determination of the end quality is performed by the control system that receives measurements from a sensor system comprising one or more sensors arranged at the rear of the paving train. The sensor system may be arranged on the compactor or on another vehicle at the end of the paving train, e.g. a separate truck, a measuring vehicle or a drone. The sensor system sends the measured values to the control system comprising a control unit arranged e.g. on the compactor. The used sensors may e.g. be a temperature sensor, a heat camera sensor, a laser sensor, an ultrasonic sensor, a ground radar sensor, etc, and the sensors may also be arranged on other vehicles in the paving train. The control system may also receive environmental condition data, such as weather condition data, material temperature, information regarding the material production, and information regarding the material logistics.

In one example, the end result is represented by the surface geometry of the finished surface. The surface geometry may include at least one of surface texture, slope, surface smoothness, density, compaction degree, and longitudinal evenness of the surface.

The control system evaluates the measured values and determines an end quality of the finished surface. The determined end quality is compared to the anticipated end result, and if the determined end quality is outside of the anticipated end result, e.g. above or below a maximum or minimum anticipated end result value, a parameter of the paving process is adjusted based on the determined end quality. Depending on the nature of the determined end quality, the parameter that is adjusted in the paving process may e.g. be the speed of the paving system and/or the compaction system. It is also possible to adjust the amount of compaction by the compactor.

It is also possible to use the determined end quality to give feedback to the production plant of the surface material and/or the delivery logistics of the material, e.g. to adjust the temperature of the surface material depending on the delivery time or weather conditions. The surface material is in one example asphalt, but hydraulically bound material (RCC/CBM) could also be used.

With this method, it is possible to provide verification data directly when the paving process is finished. By storing the anticipated end result in the control system prior to the start of the paving process, the determined end quality can be compared directly to the anticipated end result. In this way, a verification of the end result of the paving process can be obtained directly. Verification data can e.g. be sent directly to the customer or an authority. At the same time, deviations from the anticipated end result can be obtained for later considerations.

The end result data is saved in a memory, and the values that are required for the final verification can be extracted from the saved end result data. In one example, the end result data is compared to the anticipated end result and if the end result data is within the anticipated end result, an OK may be issued and the end result data can be sent to a customer. An advantage of storing all end result data is that different users may require different values for the assessment of the final paving quality. The community may e.g. focus on road surface smoothness and a sub-contractor may e.g. focus on asphalt density.

At the same time, the method can adapt the paving process directly when problems are detected, which makes it possible to correct faults and to eliminate large re-work of the surface. This helps to meet the required quality, especially if the paving train is autonomous. At the same time, the end result data will provide traceability by providing continuous data over the entire surface, which may also be saved in a database for later reference. This will reduce the need for core-samples and instead give the possibility of testing in risk-areas where results may be more uncertain.

### BRIEF DESCRIPTION OF DRAWINGS

The invention will be described in greater detail in the following, with reference to the attached drawings, in which
- Fig. 1: shows a schematic paving train according to the invention,
- Fig. 2: shows a further example of a paving train according to the invention, and
- Fig. 3: shows a schematic flow chart of the inventive method.

### MODES FOR CARRYING OUT THE INVENTION

The embodiments of the invention with further developments described in the following are to be regarded only as examples and are in no way to limit the scope of the protection provided by the patent claims.

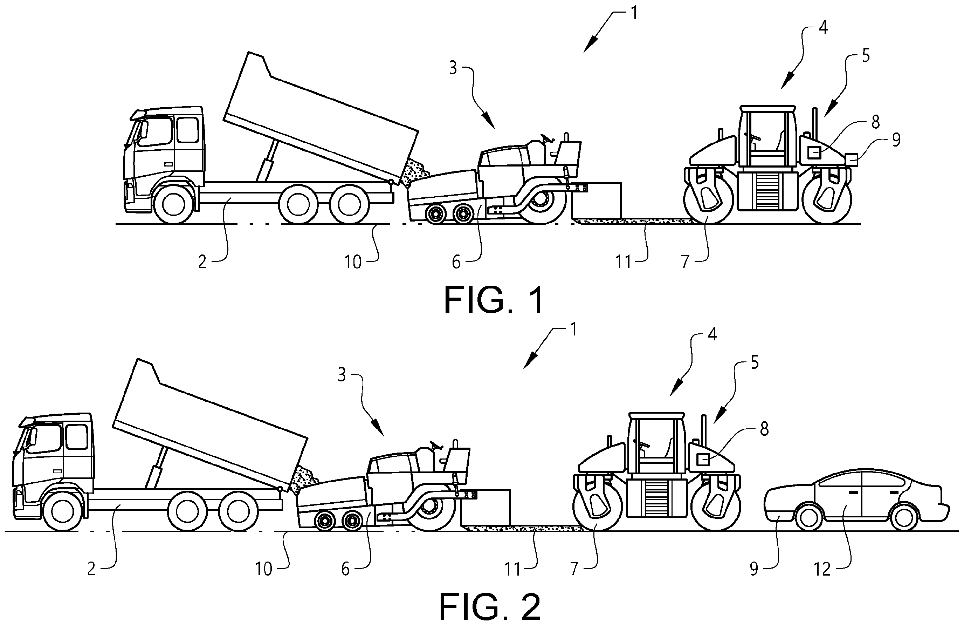

Figs. 1 and 2 show a schematic paving train 1 comprising a paving system 3 and a compaction system 4. The paving system 3 comprises at least one paving machine 6 and the compaction system 4 comprises at least one compactor 7. The paving machine 6 and the compactor 7 may be combined in one unit that comprises both a paving function and a compaction function. Some paving machines comprises a screed that flattens the material, but a compactor is still used to achieve the final end result with regards to the compaction degree and surface smoothness. The paving train receives paving material such as asphalt from a transporting unit, e.g. a truck 2, driving in front of the paving machine 6. It is also possible to connect the truck to the paving machine, or to push the truck by the paving machine. The paving train is in one example an autonomous paving train where the paving process is controlled completely by a control system without any human interference. The transporting unit that delivers the paving material may still be driven by humans.

The paving machine distributes a layer of surface material 11 on the basecourse 10, and may also partially flatten the material. The thickness of the layer is predefined but could be changed slightly in dependency of the determined end result and on the type of basecourse. The speed of the paving machine is e.g. set depending on the type of surface material, the temperature of the surface material and/or the thickness of the material layer. Preferably, the paving machine is driven by a constant and continuous speed, but it is possible to adapt the speed to the requirements. Should e.g. a truck delivering surface material be late, the paving machine may slow down temporarily.

The compaction system 4 comprises one or more units that have compaction capability, such as a compactor 7, a roller or a paver, which will compact the surface material to an anticipated density and smoothness. The compactor normally drives in a predefined pattern that should give the surface its final shape. Depending on e.g. the surface temperature, the compacting pattern can be adjusted. By constantly measuring the end result, it is e.g. possible to control the position of the roller in relation to the border between cold and hot surface material. This will minimize errors in the stiffness measurement in the layer being compacted.

In the paving train, the different machines, such as a paving machine and a compactor, comprise various sensor that constantly measures different parameters of the paving process and adapts each machine to the measured values. The sensor values may also be sent to other machines for feedback purposes, and external sensors may also be used for feedback and control of the machines.

At the rear of the paving train 1, a sensor system 9 comprising one or more sensors is arranged in order to measure the end result of the paving process. The sensor system may be arranged on the compactor 7, or may be arranged on a specific measuring vehicle 12 or on a drone. The sensor system sends the measured end result values to a control system 5 comprising e.g. an electronic control unit (ECU) 8 running a computer program, which will determine an end quality value. At the same time, the end result data is saved in a memory positioned e.g. in the ECU. The end result data may also be transferred to an external database. It is possible to send all end result data to the external database, or to extract some values that are transferred. In one example, one set of values of the end result data is sent to a first external database, and a second set of values of the end result data is sent to another external database. It is also possible to compare the end result data directly to the anticipated end result, and to compile a deviation list that shows the difference between the actual end result and the anticipated end result.

The control system may also comprise a distributed computer system comprising several processors arranged either on-board or off-board the paving train. The control system compares e.g. end quality values with anticipated end quality values. If an end quality value is outside of an anticipated end quality value, a parameter of the paving process or the surface material property can be adjusted in order to bring the end quality value back to the anticipated end quality value.

The sensors used in the sensor system may e.g. include a thermal camera, IR sensors, surface scanners, radar, etc. and may be arranged on the compactor, on another vehicle, on a drone or may be handheld. The sensors may be connected to the control unit by cables or may be wireless. The control unit may be positioned on the compactor or may be arranged at a remote location. The control unit may communicate with the other parts of the paving train directly or through an external server. The used sensors and the measured values are preferably adapted to the end result data required for the verification of the final paving quality.

The sensor system is adapted to measure e.g. cross-fall of the surface, compaction grade of the surface material, texture of the surface, smoothness of the surface, heat of the surface and a heat profile of the surface, and geo-positioning of the compactor.

By measuring the end result directly and giving feedback to the paving process in real-time, it may also be possible to adapt the process steps to changes in the used surface material. It is e.g. possible to adapt the compaction grade to condition changes in the process, such as the weather or the actual temperature of the asphalt. In this way, it may be possible to use asphalt that would normally be discarded, e.g. asphalt that would be considered to have a too low temperature, such that material must not be discarded.

In one example, as shown in Fig. 1, the paving machine 5 distributes the surface material 11, in this case asphalt, on the basecourse 10 in an even layer, where the thickness of the layer is set by the screed of the paving machine. A compactor 7 follows and compacts the asphalt to a final density. The compactor drives in a predefined pattern that is adapted to provide a desired compaction grade of the asphalt, depending e.g. on the basecourse. The compactor is provided with a sensor system 9 that measures the end result of the compaction. The measured end result is processed in an ECU 8 that determines an end quality of the paving process and compares this end quality to an anticipated end quality. If the determined end quality is within the anticipated end result, the paving process can continue as it is. If the determined end quality is outside of the anticipated end result, one or more parameters of the paving process are adjusted in order to bring the determined end quality back to the anticipated end result. Depending on the type of inconsistency or fault, different parameters may be adjusted. At the same time, the end result data is saved in a memory in the ECU 8. In this way, final verification will always be possible by using the saved end result data, and is not affected by the feedback adjustments.

In one example, the compaction grade is outside of the anticipated end result. In this case, it may suffice to drive the compactor over the surface one more time, or to use a vibrating compactor to bring the compaction grade within the anticipated end result if the compaction grade is below the anticipated end result. If the compaction grade is above the anticipated end result, i.e. if the density is too high, it is possible to use less compaction or to increase the thickness of the asphalt layer. It may also be possible to change the paving speed.

It may also be that changes in the weather requires a higher temperature of the asphalt. In this case, the control unit can send a message to the asphalt plant to increase the temperature of the delivered asphalt.

In another example, shown in Fig. 2, the end result is measured by an additional vehicle, e.g. a measuring vehicle 12 or a drone. The measuring vehicle drives after the compactor and measures the end result of the surface and saves the end result data in a memory. One advantage with using a separate measuring vehicle is that it is possible to attach more and different sensors to a separate vehicle, and that the sensors are not subjected to vibrations in the same way as when mounted on e.g. a compactor. Even if the paving train comprises several compactors, only one vehicle provided with sensors is required.

The measured end result is sent to a control unit arranged e.g. in the measuring vehicle, where the end quality is determined. The control unit may also be arranged at a remote location. The control unit sends adjustment messages if a parameter of the paving process should be adjusted. The control unit further comprises a memory where the end result data is saved. The control unit can also transfer the complete end result data to an external database, can transfer selected values from the end result data or can compare the end result data to the anticipated end result.

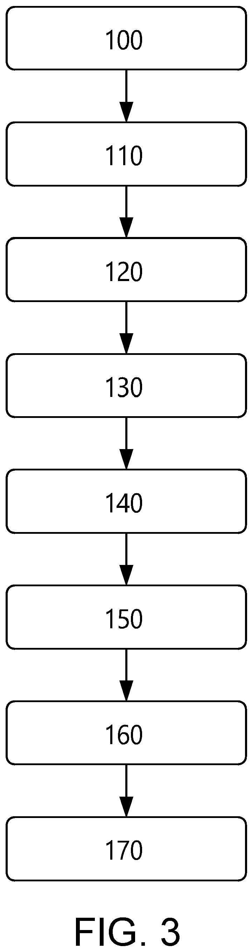

Fig. 3 shows a schematic flow chart of the method for providing verification data for a paving process.

In step 100, information regarding the basecourse is given to the control system. This information may e.g. contain information regarding the type of basecourse, variations of the basecourse over distance, firmness of the basecourse etc. Information regarding the actual basecourse is important in order to be able to meet the anticipated end result, especially for an autonomous paving train where a skilled paving operator is missing.

In step 110, information regarding the anticipated end result is given to the control system. This information may e.g. contain information regarding the desired surface texture, desired slope, desired surface smoothness, desired density, desired compaction degree, or desired longitudinal evenness of the surface.

In step 120, the end result of the paving process is continuously measured by a sensor system arranged at the end of the paving train. The end result can be measured by one or more sensors, and the sensors may measure different values relevant to the end result.

In step 130, the end quality of the paving process is determined by a control unit. The control unit may be arranged at the same vehicle as the sensor, e.g. a compactor, or may be arranged at a remote location.

In step 140, the determined end quality is compared to the anticipated end result. The end quality may be defined by one or more measurement values.

In step 150, at least one parameter of the paving process or paved material properties is adjusted based on the determined end quality, if the determined end quality is outside of the anticipated end result. In this way, the end result can be adjusted directly in real-time, which increases the quality and minimizes the need for rework of the finished surface.

In step 160, the end result data is continuously saved in a memory positioned e.g. in the ECU. The end result data is saved at a predefined sample rate and with a predefined resolution. The sample rate and/or the resolution may be selected in dependency of e.g. verification requirements. The saved end result data may be sent to an external database, where the end result values are stored and used for verification. It is possible to transfer all end result data or to transfer a number of data sets to the database, depending on the values that are required for the final verification. The used values may depend on the entity performing the final verification.

In step 170, the anticipated end result is compared with the end result data in order to obtain final verification data for the paving process. The result of the comparison may be used in different ways. In one example, the end result data may be used for the final verification if the end result values are within the anticipated end result values. In another example, the difference between the end result values and the anticipated end result is used for the final verification.

The invention is not to be regarded as being limited to the embodiments described above, a number of additional variants and modifications being possible within the scope of the subsequent patent claims.

### REFERENCE SIGNS

- 1:: Paving train
- 2:: Truck
- 3:: Paving system
- 4:: Compaction system
- 5:: Control system
- 6:: Paving machine
- 7:: Compactor
- 8:: Control unit
- 9:: Sensor system
- 10:: Basecourse
- 11:: Surface material
- 12:: Measuring vehicle

## Claims

1. A computer-implemented method for providing verification data for a paving process, where the paving process is performed by a paving train comprising at least a paving system and a compaction system, where the paving process is controlled by a control system comprising a control unit, the method comprising the steps of:
- giving information regarding the basecourse to the control system,
- giving information regarding the anticipated end result to the control system,
- continuously measuring end result data of the paving process by a sensor system arranged at the end of the paving train,
- determining the end quality of the paving process by the control system using the end result data,
- comparing the determined end quality to the anticipated end result,
- adjusting at least one parameter of the paving process or paved material properties based on the determined end quality, if the determined end quality is outside of the anticipated end result,
- continuously saving the end result data in a memory, and
- comparing the anticipated end result with the end result data in order to obtain final verification data for the paving process.

2. The method according to claim 1, wherein the paving train is an autonomous paving train.

3. The method according to claim 1 or 2, wherein required data for the final verification data is extracted from the end result data.

4. The method according to any of claims 1 to 3, wherein the end result data is compared to the anticipated end result, and the difference is stored in a deviation file.

5. The method according to any of claims 1 to 4, wherein the difference between the end result data and the anticipated end result is used to create a maintenance plan.

6. The method according to any of claims 1 to 4, wherein the end result data comprises a measured surface geometry, including at least one of surface texture, slope, surface smoothness, density, compaction degree, or longitudinal evenness of the surface.

7. The method according to any of claims 1 to 6, wherein the control system further receives condition data, such as weather condition data, material temperature, material production, or delivery logistics.

8. The method according to any of claims 1 to 7, wherein an additional unit on, above or near the finished surface comprises an additional sensor that send data to the control unit.

9. The method according to any of claims 1 to 8, wherein the adjustment of at least one parameter of the paving system is performed in real-time.

10. The method according to any of claims 1 to 9, wherein the sensors includes at least one of: a thermal camera, an IR sensor, a surface scanners, a radar, a moisture measuring sensor.

11. The method according to any of claims 1 to 10, wherein the control unit is arranged in the compaction system.

12. A computer program comprising program code means for performing all the steps of claims 1 - 11 when said program is run on a computer.

13. A computer program product comprising program code means stored on a computer readable medium for performing all the steps of claims 1 - 11 when said program product is run on a computer.

14. A control system (5) for providing verification data for a paving process in a paving train (1), the control system (5) being configured to perform the steps of the method according to any one of claims 1 - 11.

15. A paving train (1), comprising a paving system (3), a compaction system (4) and a control system (5) according to claim 14.
